# EUROPÄISCHE PATENTSCHRIFT

(11) **EP 1 310 126 B1**
(45) Veröffentlichungstag und Bekanntmachung des Hinweises auf die Patenterteilung: **31.03.2010**
(21) Anmeldenummer: 01962637.3
(22) Anmeldetag: 16.08.2001
(51) Int. Cl.: H04M 1/725, H04W 8/20, H04W 92/18, H04M 1/274

(54) **VERFAHREN ZUR KONFIGURIERUNG TECHNISCHER SYSTEME ÜBER MOBILE FERNSPRECHENDGERÄTE**
METHOD FOR CONFIGURING TECHNICAL SYSTEMS VIA MOBILE TELEPHONE TERMINALS
PROCEDE DE CONFIGURATION DE SYSTEMES TECHNIQUES PAR L'INTERMEDIAIRE D'APPAREILS TELEPHONIQUES MOBILES

(30) Priorität: 17.08.2000 DE 10040230; 27.09.2000 DE 10047919
(43) Veröffentlichungstag der Anmeldung: 14.05.2003
(60) Teilanmeldung: 09012822.4
(73) Patentinhaber: SIEMENS AKTIENGESELLSCHAFT, 80333 München (DE)
(72) Erfinder: PREHOFER, Christian, 81477 München (DE)
(74) Vertreter: Fritzsche, Thomas
(86) Internationale Anmeldenummer: PCT/DE2001/003125
(87) Internationale Veröffentlichungsnummer: WO 2002/015622

(56) Entgegenhaltungen:
- DE-A- 4 238 301
- DE-A- 19 723 099
- FR-A- 2 696 384
- GB-A- 2 334 673
- US-A- 6 028 537

## Beschreibung

Die Erfindung betrifft ein Verfahren zum Einstellen eines Benutzerprofils bei mit einer elektronischen Einrichtung versehenen technischen Systemen.

Mit zunehmenden Bedienungs- und Einstellungsmöglichkeiten durch die miniaturisierte Elektronik an Geräten des täglichen Alltags steigt der Aufwand an Eingaben und Befehlen, die der Benutzer durchzuführen hat. Aus diesem Grund erlauben auch sehr viele technische Systeme mit Hilfe ihrer elektronischen Einrichtungen eine Speicherung von benutzerabhängigen Einstellungen, die in der Softwaretechnik Benutzerprofile genannt werden.

Einige Automobile sehen beispielsweise vor, Sitzposition, Rückspiegel und Lenkradstellung elektrisch einzustellen und die dann vorliegenden Einstellungswerte, die auch als Benutzerprofil bezeichnet werden, zu sichern. Der Fahrer kann dann, nachdem er diese Einstellungen einmal durchgeführt und in einem Benutzerprofil gespeichert hat, sein für ihn zutreffendes Benutzerprofil, sofern die Einstellungen durch andere Personen verändert wurden, bei der nächsten Benutzung des Automobils schnell dadurch wieder herstellen, dass er sein individuelles Benutzerprofil auf Tastendruck auswählt. FR 2 696 381 A1 offenbart einen durch ein Kommandomodul einstellbaren Fahrzeugsitz. Dieses Modul erhält Kommandos von einer drahtlos angebundenen Fernbedienung, mit der auch ein Autotelefon bedient werden kann.

Auch in anderen Bereichen kann durch individuelle Einstellung und anschließende Speicherung der zugehörigen Einstellwerte ein derartiges Benutzerprofil erstellt werden. Beispiele hierfür sind die einem Benutzer zugeordneten Einträge in einem elektronischen Telephonbuch, die Lautstärke und die Anrufbeantwortereinstellungen eines Fernsprechendgeräts und - im industriellen Bereich - die Anpassung von Produktionsmaschinen auf die Präferenzen des jeweiligen Bedieners.

Selbst wenn an einer ersten technischen Einrichtung alle Einstellwerte eines Benutzerprofils gespeichert sind, muss der selbe Benutzer bei einer zweiten technischen Einrichtung -selbst bei gleicher Art der Einrichtung- die gleichen Einstellungen vornehmen.

Bei der Benutzung eines Automobils aus einem Firmenfuhrpark oder einer Verleihfirma beispielsweise erfordern diese Einstellungen jeweils einen erheblichen Zeitaufwand.

Auf dem Gebiet der Telekommunikation hat sich zur Vermeidung dieses Zeitaufwandes deshalb bereits eine Verwendung einer Chipkarte durchgesetzt, mit deren Hilfe der Anwender das eigene Benutzerprofil lediglich durch einschieben einer Chipkarte an einem Kommunikationsendgerät einstellen kann. Er muss also seine Kurzwahlziele, seine Signalisierungslautstärke usw. nicht jedes Mal manuell neu einstellen. Mit dem abzusehenden Anstieg der Einstellungsmöglichkeiten an technischen Systemen werden derartige Chipkarten auch an andersgearteten technischen Systemen Verbreitung erfahren. Dadurch muss aber zur Einstellung einer elektronischen Einrichtung eine zu dieser Einrichtung passende Chipkarte mitgeführt werden, wie z.B. in US 5 633 484 offenbart.

Aufgabe der Erfindung ist es, ein Verfahren anzugeben, mit dem sich die Verwendung von Chipkarten und insbesondere die Bereithaltung einer Vielzahl von unterschiedlichen Chipkarten zur Einstellung des Benutzerprofils bei unterschiedlichen technischen Systemen vermeiden lässt.

Diese Aufgabe wird erfindungsgemäß durch das Verfahren nach, Patentanspruch 1 zum Einstellen eines Benutzerprofils bei technischen Systemen, die von einer elektronischen Einrichtung (EE) gesteuert werden, gelöst.

Bei dem erfindungsgemäßen Verfahren werden bereits vorhandene Elemente eines mobilen Fernsprechendgeräts zur Speicherung von Benutzerprofilen und zu deren Übermittlung an unterschiedlichste technische Systeme verwendet. Das mobile Fernsprechendgerät ist ein Gerät, das ein ständig wachsender Personenkreis nahezu immer bei sich führt und kann zur Speicherung und Übermittlung von personenbezogenen Benutzerprofilen ohne größeren Aufwand, der sich lediglich auf eine Erweiterung der Software des mobilen Fernsprechendgeräts beschränkt, verwendet werden.

Gemäß der Erfindung können bestehende Benutzerprofile bzw. deren zugehörige Einstellwerte des technischen Systems ausgelesen und dann im mobilen Fernsprechendgerät gespeichert und modifiziert werden. Dies bedeutet, dass Änderungen des Benutzerprofils nicht unbedingt an der elektronischen Einrichtung technischer Systeme vorgenommen werden müssen, sondern auch am mobilen Fernsprechendgerät ausgeführt werden können, ohne dass dies während der Änderung mit dem technischen System kommunizieren muss. In diesem Zusammenhang ist auch die Definition mehrerer Benutzerprofile für einen Benutzer vorteilhaft (Anspruch 3), etwa um z.B. bei industriellen Produktionsmaschinen unterschiedlichen Produktionsaspekten gerecht zu werden.

Die Erfindung sieht vor, dass der Besitzer des mobilen Fernsprechendgeräts sich durch Übermittlung eines im Zusammenhang des Benutzerprofils gespeicherten zugangskodes an der technischen Einrichtung autorisiert. Eine Identifizierung des technischen Systems nach Anspruch 2 ist vorteilhaft, um das erfindungsgemäße Verfahren gezielt auf ein technisches System anzuwenden, das über eine gleiche Schnittstelle zur drahtlosen Übermittlung von Benutzerprofilen verfügt wie ein zu diesem benachbartes weiteres technisches System, das nicht eingestellt werden soll.

Bei der Erfindung muss eine Person, die über ihr mobiles Fernsprechendgerät ein Benutzerprofil an der elektronischen Einrichtung einrichten oder abrufen will, diesen Übertragungsvorgang vor Veranlassen der Übermittlung am mobilen Kommunikationsendgerät durch eine Eingabe, beispielsweise durch Betätigen einer Taste, am technischen System bestätigen. Dies hat den Vorteil, dass eine unbeabsichtigte oder missbräuchliche Konfiguration des technischen Systems vermieden wird.

Zur weiteren Erläuterung eines Ausführungsbeispiels wird dieses anhand einer Zeichnung näher erläutert.

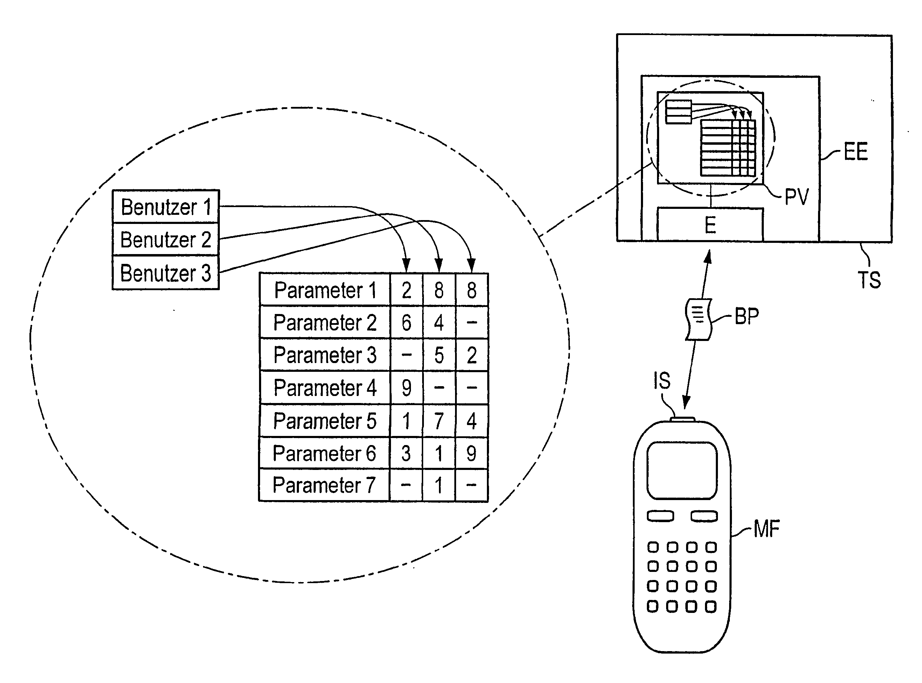

Die Figur zeigt in schematischer Darstellung ein mobiles Fernsprechendgerät im Datenaustausch mit einem technischen System.

In der Figur wird ein technisches System TS dargestellt, das als Teil einer elektronischen Einrichtung EE eine Benutzerprofilverwaltung PV aufweist. Ein weiterer Bestandteil der elektronischen Einrichtung EE ist die Empfangseinheit E, die Daten z.B. über eine Infrarotstrecke sendet oder empfängt. Mit Hilfe dieser Empfangseinheit E kann eine Kommunikation mit einem mobilen Fernsprechendgerät MF stattfinden. Die Abbildung zeigt ein mobiles Fernsprechendgerät MF, das über eine Infrarotschnittstelle IS verfügt. Derartige Infrarotschnittstellen IS sind an sich bekannt, zum Beispiel bei dem mobilen Fernsprechendgerät Siemens S35i. Über die Empfangseinrichtung E empfängt die elektronische Einrichtung EE Benutzerprofile BP von der Infrarotschnittstelle IS des mobilen Fernsprechendgerätes MF, kann diese aber auch senden, um an der elektronischen Einrichtung EE gespeicherte Benutzerprofile BP in den Speicher des mobilen Fernsprechendgeräts MF zu übertragen.

In der Profilverwaltung PV der elektronischen Einheit EE werden die Benutzerprofile BP z.B. in Form einer einfachen verketteten Liste gespeichert. Die in der Figur dargestellte Liste einzelner Benutzerprofilnamen ("Benutzer 1" bis "Benutzer 3") verweist auf eine jeweils zugeordnete Spalte von Parameterwerten, die in einer zweiten Liste zeilenweise den jeweiligen Parameternamen ("Parameter 1" bis "Parameter 7") zugeordnet sind. Jeweils eine Spalte der letztgenannten Liste repräsentiert somit die Benutzerprofildaten des verknüpften Benutzerprofils. In der Figur ist ersichtlich, dass einige Parameter eines Benutzerprofils von dem zugehörigen Benutzer nicht definiert wurden, so zum Beispiel der Parameter 3 des Benutzerprofils "Benutzer 1", der in der Figur als leer ("-") gekennzeichnet wurde. In ähnlicher Weise können Benutzerprofile BP auch im mobilen Fernsprechendgerät MF verwaltet werden.

## Patentansprüche

1. Verfahren zum Einstellen eines Benutzerprofils (BP) bei technischen Systemen (TS), die von einer elektronischen Einrichtung (EE) gesteuert werden,
**dadurch gekennzeichnet,**
**dass** von der elektronischen Einrichtung (EE) über eine drahtlose Übertragungsstrecke übermittelte, das Benutzerprofil (BP) repräsentierende Benutzerprofildaten von einem mobilen Fernsprechendgerät (MF) empfangen und gespeichert werden,
**dass** für eine Wiederherstellung des Benutzerprofils (BP) die Benutzerprofildaten von dem mobilen Fernsprechendgerät (MF) über die drahtlose Übertragungsstrecke an die elektronische Einrichtung (EE) übermittelt werden, dass eine Zugangsberechtigung an der elektronischen Einrichtung (EE) durch Übermittlung eines Zugangskodes als Bestandteil der Benutzerprofildaten freigeschaltet wird, wodurch eine Autorisierung am technischen System erfolgt, und
**dass** erst nach einer Bestätigungseingabe am technischen System (TS) Benutzerprofildaten übermittelt werden.

2. Verfahren nach einem der vorhergehenden Ansprüche,
**dadurch gekennzeichnet,**
**dass** von dem mobilen Fernsprechendgerät (MF) eine die elektronische Einrichtung (EE) identifizierende Kennung vor Übertragung der Benutzerprofildaten übermittelt wird.

3. Verfahren nach einem der vorhergehenden Ansprüche,
**dadurch gekennzeichnet,**
**dass** in dem mobilen Fernsprechendgerät (MF) unterschiedliche Benutzerprofile (BP) für unterschiedliche elektronische Einrichtungen (EE) verwaltet werden.

4. Verfahren nach einem der vorhergehenden Ansprüche,
**dadurch gekennzeichnet,**
**dass** die Kommunikation des mobilen Fernsprechendgeräts (MF) mit der elektronischen Einrichtung (EE) über eine Infrarotschnittstelle (IS) ausgeführt wird.

5. Verfahren nach einem der Ansprüche 1 bis 4,
**dadurch gekennzeichnet,**
**dass** die Kommunikation des mobilen Fernsprechendgeräts (MF) mit der elektronischen Einrichtung (EE) über eine drahtlose Schnittstelle gemäß des Bluetooth-Standards ausgeführt wird.

## Claims

1. A method for configuring a user profile (BP) in technical systems (TS) which are controlled by an electronic device (EE), **characterized in that** user profile data representing the user profile (BP) transmitted from the electronic device (EE) via a wireless transmission link is received and stored by a mobile telephone terminal (MF), **in that** in order to reconstruct the user profile (BP), the user profile data are transmitted from the mobile telephone terminal (MF) via the wireless transmission link to the electronic device (EE), **in that** access authentication is cleared at the electronic device (EE) by transmitting an access code as a component of the user profile data, whereby the technical system is authorized, and **in that** the user profile data are only transmitted following input of a confirmation to the technical system (TS).

2. A method according to one of the preceding claims, **characterized in that** a signal identifying the electronic device (EE) is transmitted by the mobile telephone terminal (MF) prior to transmitting the user profile data.

3. A method according to one of the preceding claims, **characterized in that** various user profiles (BP) for various electronic devices (EE) are managed in the mobile telephone terminal (MF).

4. A method according to one of the preceding claims, **characterized in that** the mobile telephone terminal (MF) communicates with the electronic device (EE) via an infrared interface (IS).

5. A method according to one of claims 1 to 4, **characterized in that** the mobile telephone terminal (MF) communicates with the electronic device (EE) via a wireless interface that complies with the Bluetooth standard.

## Revendications

1. Procédé pour configurer un profil d'utilisateur (BP) dans des systèmes techniques (TS) qui sont commandés par un dispositif électronique (EE), **caractérisé**
**en ce que** des données de profil d'utilisateur représentant le profil d'utilisateur (BP) et transmises par le dispositif électronique (EE) par le biais d'une voie de transmission sans fil sont reçues et mémorisées par un appareil téléphonique mobile (MF),
**en ce que**, pour une restauration du profil d'utilisateur (BP), les données de profil d'utilisateur sont transmises par l'appareil téléphonique mobile (MF) au dispositif électronique (EE) par le biais de la voie de transmission sans fil, en ce qu'une autorisation d'accès est validée sur le dispositif électronique (EE) par le transfert d'un code d'accès faisant partie intégrante des données de profil d'utilisateur, moyennant quoi il s'ensuit une autorisation sur le système technique, et en ce que des données de profil d'utilisateur sont transférées seulement après une opération de confirmation sur le système technique (TS).

2. Procédé selon l'une quelconque des revendications précédentes, **caractérisé en ce que**
un indicateur identifiant le dispositif électronique (EE) est communiqué par l'appareil téléphonique mobile (MF) avant la transmission des données de profil d'utilisateur.

3. Procédé selon l'une quelconque des revendications précédentes, **caractérisé en ce que**
différents profils d'utilisateur (BP) pour différents dispositifs électroniques (EE) sont gérés dans l'appareil téléphonique mobile (MF).

4. Procédé selon l'une quelconque des revendications précédentes, **caractérisé en ce que**
la communication de l'appareil téléphonique mobile (MF) avec le dispositif électronique (EE) est effectuée par le biais d'une interface infrarouge (IS).

5. Procédé selon l'une des revendications 1 à 4,
**caractérisé en ce que**
la communication de l'appareil téléphonique mobile (MF) avec le dispositif électronique (EE) est effectuée au moyen d'une interface sans fil selon la norme Bluetooth.
